# EUROPEAN PATENT SPECIFICATION

(11) **EP 0 449 635 B1**
(45) Date of publication and mention of the grant of the patent: **07.06.1995**
(21) Application number: 91302756.1
(22) Date of filing: 28.03.1991
(51) Int. Cl.: B62K 21/12

(54) **Bicycle handlebars**
Fahrradlenker
Guidon pour bicyclettes

(30) Priority: 29.03.1990 US 501687
(43) Date of publication of application: 02.10.1991
(73) Proprietor: Lennon, Dan Cochran, Bozeman Montana 59771 (US)
(72) Inventor: Lennon, Dan Cochran, Bozeman Montana 59771 (US)
(74) Representative: Gordon, Richard John Albert

(56) References cited:
- FR-A- 961 924
- US-A- 3 289 493
- US-A- 4 250 770

## Description

This invention relates to bicycle handlebars which improve bicycle rider performance and stamina and provide increased levels of rider comfort.

It is known from US-A-4 750 754 and US-A-4878397 that bicycle design is a complex art. Seemingly minor structural changes can often yield significant performance advantages to bicycle riders. Typically, the performance advantages are most apparent in bicycle race competitions.

Competitive bicycle racing requires attention to several factors. Two important factors include rider comfort and frontal area profile of the bicycle and rider combination. Minimizing frontal area increases performance by reducing drag caused by the movement of the bicycle and rider through the air. Improving rider comfort enhances performance by allowing the rider to function for longer periods of time without tiring. Both frontal area and comfort are greatly affected by the position, shape and arrangement of the bicycle handlebars.

Frequently, the design of handlebars requires balancing the need for a reduced frontal area against providing an uncomfortable rider position. For example, a rider may be comfortable sitting in a relatively upright postion. When a new handlebar design requires that the rider crouch lower to minimize his frontal area, his comfort level may be reduced because the handlebar forces him to maintain the crouched position for extended periods of time. Thus, balancing these two factors can constrain handlebar design.

Bicycle handlebar design is further constrained by the rules of various riding and racing organizations. These organizations sanction various riding events and require participating riders to comply with the organization's rules. Many of these rules are designed to promote the safety of the large number of riders which frequently ride in close proximity to one another. Thus, sanctioning body rules may prohibit the use of otherwise efficient handlebar designs when the design is thought to compromise rider safety. Such prohibitions have applied in some circumstances to handlebars which include handlebar portions which project substantially forward from the bicycle crosspiece and handlebars having forward facing grip ends which might be a hazard in a mass event start.

In FR-A-961924 and US-A-4 250 770 there is disclosed a bicycle handlebar connectable to a steering post located forwardly of a bicycle seat and comprising a crosspiece having a central portion connectable with the steering post and a pair of sideways portions extending therefrom, a pair of intermediate drop portions extending forwardly and downwardly from the pair of sideways portions to a region generally beneath the crosspiece and a pair of lower drop sections.

Moreover in FR-A-961924 the lower drop sections each extend from a corresponding one of the pair of drop portions to opposite sides of the steering post and generally beneath the steering post for defining a pair of hand gripping positions located generally beneath the steering post to allow the rider to assume a narrow frontal profile. The lower drop portions are formed by handles provided on the ends of the tubing providing the major part of the handlebars.

The invention is characterised in that a handlebar having such lower drop sections is formed of an integral piece of tubing of uniform diameter. The invention thus provides new handlebar designs which in an economical manner afford the rider a variety of handlebar gripping positions and allows the rider to comfortably minimize his frontal area while at the same time providing for the safety of nearby riders. The most desirable embodiments of the invention involve new handlebar and bicycle designs, but the embodiments of the invention also include various adapter kits which a rider can fit to the drop bars of the invention to obtain further advantages of the new designs.

Embodiments of the invention will now be described, by way of example with reference to the accompanying drawings in which:-
Figure 1 is a perspective view of a bicycle including one embodiment of the bicycle handlebar system;
Figure 2 is a plan view of the handlebar shown in Figure 1;
Figure 3 is a front view of the handlebar shown in Figures 1 and 2;
Figure 4 is a side view of the handlebar shown in Figures 1, 2 and 3;
Figure 5 is a perspective view of the handlebar shown in Figures 1, 2, 3, and 4;
Figure 6 is a fragmentary front view of a rider riding the bicycle shown in Figure 1;
Figure 7 is a fragmentary side view of a rider riding the bicycle shown in Figure 1 including a phantom view illustrating the position of the rider's arms when gripping the crossbar;
Figure 8 is a fragmentary perspective view of a bicycle and handlebar system which includes a strut tensioning device;
Figure 9 is an enlarged fragmentary perspective view illustrating the detail of the strut to handlebar attachment shown in Figure 8;
Figure 10 is an enlarged fragmentary perspective view illustrating the fork to strut attachment of Figure 8;
Figure 11 is a perspective view of a different adapter kit for use with the handlebar of Figure 1;
Figure 12 is a perspective view of another embodiment of the bicycle and handlebar system including a continuous loop feature; and
Figure 13 is a side view of the handlebar shown in Figure 12.

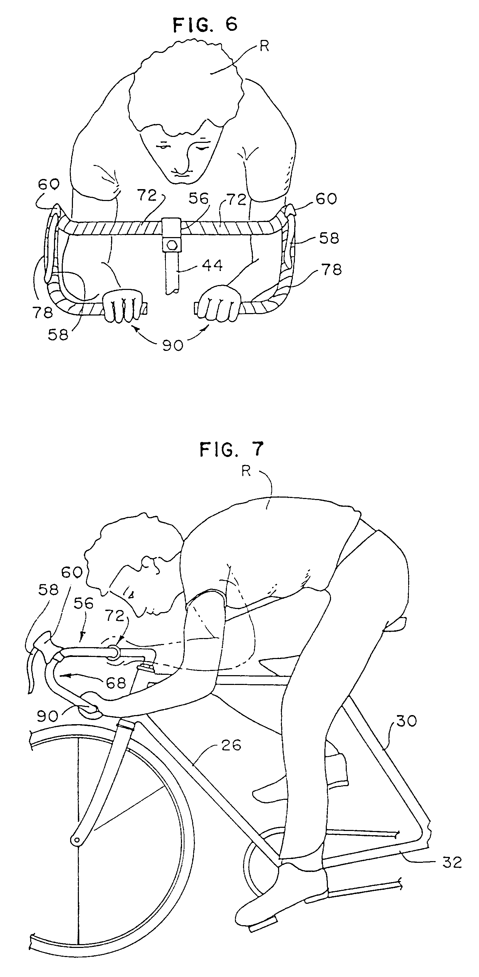

Bicycle handlebar systems which employ lower drop portions to provide comfortable, safe, low frontal area riding positions can take a variety of forms as illustrated by the following figures and accompanying discussion. Although the various embodiments of the invention appear different in physical structure, they generally share a common feature in that each embodiment allows a rider to assume an advantageous riding position by gripping a lower drop handlebar portion located near the steering post. Preferably, these positions allow the rider's hands to be placed in close proximity to one another to allow the rider to assume a narrow frontal profile. As will be discussed in detail in conjunction with Figures 6 and 7, handlebar portions located in this region afford many of the advantages of handlebars having forward projecting portions without compromising the safety of nearby riders.

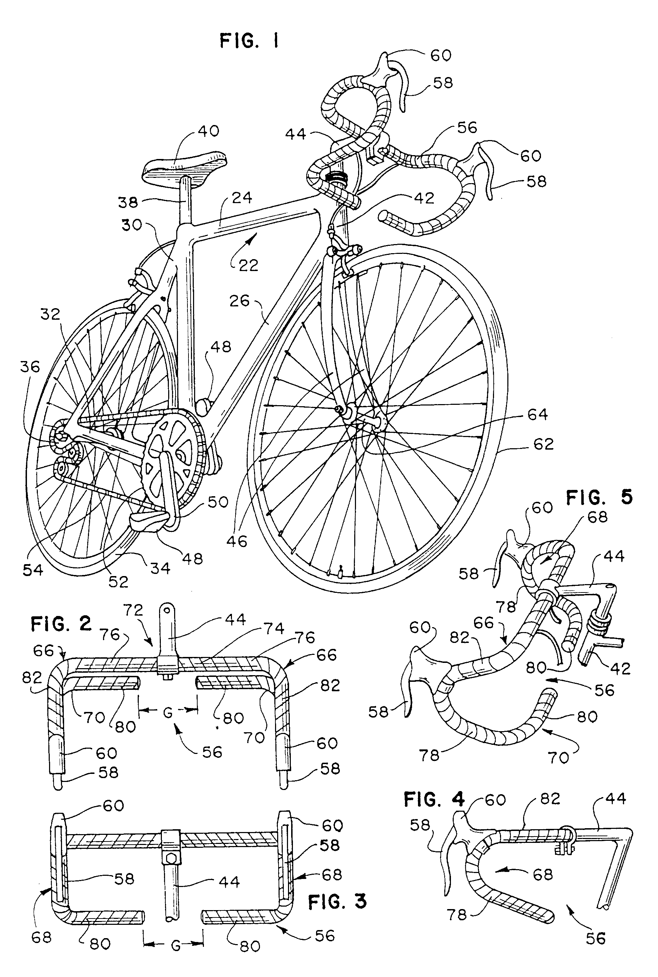

Lower drop portion handlebars can be attached to otherwise conventional bicycles. For example, Figure 1 illustrates an otherwise conventional bicycle which employs one embodiment of a lower drop style handlebar. Bicycle 20 includes a triangular-shaped frame 22 comprised of a top tube 24, a down tube 26 and a seat tube 28. Seat stays 30 and chain stays 32 join to rigidly secure a rear wheel 34 and its axle 36. Extending from seat tube 28 is a seat post 38. Mounted atop seat post 38 is a saddle 40. Seat post 38 may be raised or lowered into the seat tube to accommodate riders of differing heights. Top tube 24 and down tube 26 extend forwadly to a fork tube 42. Journaled within fork tube 42 is a stem 44 leading to front fork 46. Pedals 48 mounted to cranks 50 operate a drive sprocket 52 and a chain drive 54 in a known manner to propel the bicycle. One embodiment of a lower drop style handlebar system 56 is attached to stem 44 and allows the rider to comfortably maintain a low profile. Mounted to handlebar 56 are a pair of brake levers 58 protruding from a pair of brake hoods 60. A front wheel 62 having an axle 64 is secured within fork 46.

The detailed form of lower drop style bar 56 is illustrated in Figures 2, 3, 4, and 5, which are top, front, side and perspective views of handlebar 56 respectively. As shown best in Figure 5, handlebar 56 has a pair of first bends 66 which turn forward from crosspiece 72, a pair of second bends 68 which turn forward from crosspiece 72, a pair of second bends 68 which turn first forwardly and downwardly and then downwardly and rearwardly to almost complete a semicircular arc, and a pair of third bends 70 which turn inwardly in a direction generally toward handlebar stem 44. The first bends are best shown from above the bar, see Figure 2, where a crosspiece 72 has a central portion 74 which extends into a pair of sideways projecting portions 76. Central portion 74 is secured to stem 44 in a conventional manner. Sideways portions 76 extend sideways from stem 44 and further extend into intermediate drop portions 78 which include second bends 68, which can best be seen in the side view of Figure 4. The perspective view of Figure 5 best illustrates how intermediate drop portions 78 next extend into lower drop portions 80 at third bends 70.

In one preferred embodiment and as shown in the drawings generally, first bends 66 turn forwardly approximately 90 degrees from crosspiece 72, second bends 68 turn forwardly, downwardly, and rearwardly to define an arc of approximately 160 degrees, and third bends 70 turn inward approximately 90 degrees. The ends of lower drop bars 80 are converging toward the center and are generally coaxial with each other. An additional side gripping position which is comfortable for the rider is included in the preferred embodiment as four-centimeter-long straight portions 82, which are located immediately after first bend 66 and before second bend 68.

In the illustrated embodiment, lower drop portions 80 are located approximately two centimeters forward of crosspiece 72. In other embodiments, drop portion 80 may be either ahead or behind of crosspiece 72 depending on stem length and crossbar rotation. Lower drop portions 80 also define a lower drop portion gap G, of approximately twelve centimeters. The gap G allows side pull brake calipers to operate without interference. Additionally, in one version, there is a fourteen centimeter vertical distance between crosspiece 72 and lower drop portions 80 which is a shallow drop. In another version, there is a sixteen centimeter vertical distance between crosspiece 72 and lower drop portions 80 which is a shallow drop. In another version, there is a sixteen centimeter vertical distance between crosspiece 72 and drop portions 80 which is a deep drop. The horizontal distance between intermediate drop portions 78 is typically 40 to 44 centimeters. It should be understood that these dimensions are for an adult rider, and that several ranges of dimensions are commonly provided for riders of different sizes. Additionally, wider bar configurations would be desirable if wider bars were allowed under the rules of certain sanctioning bodies.

The handlebars of Figures 1-5 can be constructed by bending type 7075 aluminum tubing haviang a 24 millimeter outer diameter and a 1.4-1.5 millimeter wall thickness. Preferably, the tubing is bent into curved regions as shown. Curved bends are preferred because handlebars constructed with angular bends exhibit a higher degree of unwanted handlebar flex. While the handlebars of Figures 1 - 5 are shown as being taped, the bar is typically sold to the rider as an untaped bar. This allows the rider to add handlebar tape to suit his personal preference.

A lower drop style handlebar system such as that described in conjunction with Figures 1 - 5 improves both the aerodynamic position and stamina of the rider when compared to the conventional style drop handlebars used in road racing. Figures 6 and 7 illustrate one advantageous riding positon that may be assumed by a rider employing the present lower drop style handlebars. Figure 6 shows a rider R gripping handlebar 56 at its innermost lower drop positions 90. When gripping the bar in this manner, rider R has assumed a comfortable position having a minimal frontal area. In this gripping position, the rider's arm forms an obtuse angle A as seen in Figure 7. If rider R was instead to grip handlebar 56 on its crosspiece 72, as would occur using conventional handlebars, rider R would be forced to bend his arms at an uncomfortable acute angle B shown on Figure 7 if he desired to maintain a low position. Alternatively, if rider R assumed a comfortable, more extended arm position, rider R would become more upright and exhibit an undesirable greater frontal area.

A rider R using conventional handlebars might also attempt to maintain a low, comfortable position by gripping the conventional handlebar in approximately the same regions as provided by intermediate drop portions 78 of handlebar 56. While the resultant rider position might be low and comfortable, the aerodynamic properties of the position would be less desirable because the wider spread of the rider's arms would increase drag.

As illustrated in Figures 6 and 7, these conflicting issues are resolved by adding lower drop portions such as portions 78, which allow the rider R to maintain a low and narrow position while at the same time extending his arms in comfortable, obtuse angle. The benefits obtained from this design approach those obtained by forwardly projecting bars while at the same time minimizing any perceived safety hazard associated with forwardly projecting bars.

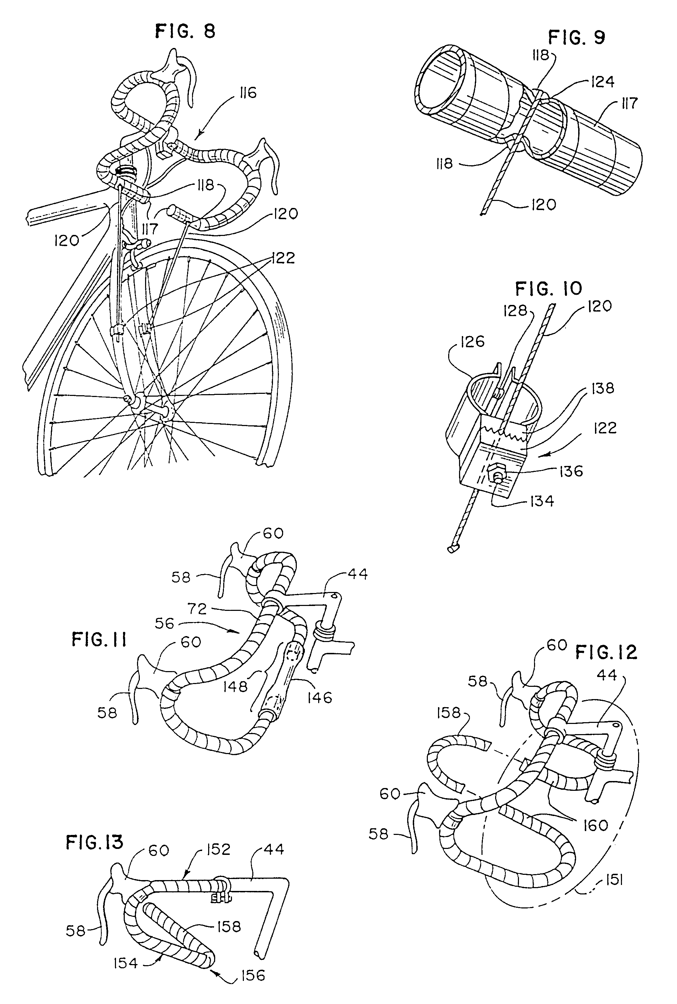

While rider stamina can be increased by providing comfortable, low frontal area riding positions, rider performance can be increased by removing unwanted flex from bicycle components. This principal is illustrated in another embodiment of the invention which provides struts for tensioning the handlebar system under certain riding conditions. The struts provide a downward tensioning force on the handlebar system to prevent upward handlebar flex under certain riding conditions, such as when the rider is accelerating, but still allow the handlebar to flex in the downward direction to retain the shock absorbing benefits of downward handlebar flex. One strut embodiment is shown in Figures 8-10, in which a handlebar 116 is substantially similar to handlebar 56 of Figure 1 but includes apertures 118, see Figure 9, located in lower drop portions 117 for attaching a pair of struts 120 between drop portions 117 and fork 46. Struts 120 are attached to fork 46 using a pair of strut clamping means 122, see Figure 10. The use of struts 120 to reduce upward flex in handlebar 116 permits a more efficient transmission of power to the bicycle. This, in turn, can enable the rider to accelerate more quickly than would be possible if rider power was wasted as a result of upward handlebar flex. Struts 120 can provide a similar beneficial effect when attached to potentially flexible portions of other handlebar systems, although their use with a lower drop style bar allows the strut ends to be placed at a more in-board position which may offer safety advantages in a mass start event.

Figure 9 shows in detail how strut 120 is threaded through lower drop portion 117. Strut 120 passes through apertures 118 and has an upper strut end 124 having at least one dimension larger than aperture 118. This strut 120 pulls against handlebar 116 when handlebar 116 is flexed upwardly. As shown, apertures 118 may be recessed to prevent upper strut end 124 from protruding beyond the generally cylindrical surface of lower drop portion 117. Figure 10 shows strut clamping means 122 in detail. Clamping means 122 includes a fork clamp 126 using screw 134 and bolt 136. Strut 120 is placed between serrated inner surfaces 138 of clamping members 132 and secured by tightening bolt 136. Strut 120 is shown as a flexible cable, but may also be a solid material of small enough cross-sectional dimension to permit the strut to flex when the handlebar is flexed downwardly. It is important that the solid strut be capable of flexing, because if it does not flex, the downward handlebar flex which normally absorbs shocks caused by road surface imperfections will be lost. Struts 120 may be secured by any conventional means well known in the art for connecting cable wire to a metal member or for connecting a solid spoke to a metal member.

A lower drop bar adapter piece may be fitted to a lower drop style bar to provide additional gripping positions or to add rigidity to the lower drop portions. Figure 11 illustrates such an embodiment of the invention. In this embodiment, handlebars 56 are fitted with a lower drop adapter tube 146 such that a continuous lower drop region 148 is formed below crosspiece 72. Lower drop adapter tube 146 can be secured to handlebars 56 by any of several means well known in the art. Besides providing a continuum of lower drop positions, adapter tube 146 can reduce flex in handlebar 56 which may compromise the transfer of rider power to the bicycle under certain pedaling conditions as discussed in conjunction with Figure 8. Flexing can also be reduced and additional riding positions provided, by attaching a pair of adapter bars (not shown) which extend forwardly, upwardly and rearwardly from lower drop portions 80 to crosspiece 72. These adapters may be positioned at any convenient axial location along lower drop portions 80 and crosspiece 72, thereby reducing flex in the lower drop portions and adding additional lower drop gripping positions.

A final embodiment of a lower drop style bar having a curved lower drop means is illustrated in Figures 12 and 13. A handlebar 150 forms a continuous loop offering a variety of rider grip positions in lower drop region 151. Each side of handlebar 150 includes a forward turning first bend 152, a forward, downward and rearward turning second bend 154, and a first rearward and inward then inward, forward and upwardly turning bend 156. Bends 156 join at a geneally U-shaped fourth bend 158 which is generally forward and upwardly extending with the open portion of the U opening rearwardly towards the rider. Fourth bend 158 may be positioned within the generally C-shaped profile defined by second bend 154 as shown by the side view of handlebar 150 in Figure 13. As shown, fourth bend 158 may be removed, leaving handlebar 150 with two unconnected upward, inward, and forwardly projecting lower drop extensions 160.

Thus, the handlebar systems and adapter kits of Figures 1 - 13 provide handlebar systems which allow a rider to comfortably maintain a minimal frontal area without compromising the safety of nearby riders. These advantages are attained primarily by adding lower drop handlebar portions in a region below the cross bar.

## Claims

1. A bicycle handlebar (56) connectable to a steering post (44) located forwardly of a bicycle seat (40) comprising a crosspiece (72) having a central section connectable with the steering post (44) and a pair of sideways portions (76) extending sideways therefrom, a pair of intermediate drop portions (78) extending forwardly and downwardly from the pair of sideways portions (76) to a region generally beneath the crosspiece (72), and a pair of lower drop sections (80) extending from a corresponding one of the pair of drop portions (78) to opposite sides of the steering post (44) and generally beneath the steering post (44) for defining a pair of hand gripping positions located generally beneath the steering post (44) to allow the rider to assume a narrow frontal profile characterised in that the handlebar (56) is formed of an integral piece of tubing of uniform diameter.

2. A handlebar as claimed in claim 1 characterised in that the pair of lower drop sections (80) terminate at ends having a gap therebetween with the gap being located beneath the steering post (44).

3. A handlebar as claimed in claim 1 or claim 2 characterised in that the pair of intermediate drop portions (78) extend forwardly approximately 90 degrees and then extend forwardly, rearwardly and downwardly approximately 160 degrees, and the pair of lower drop sections (80) extend from the intermediate drop portions (78) inwardly approximately 90 degrees to converge coaxially toward each other.

4. A handlebar as claimed in any one of the preceding claims characterised in that the pair of lower drop sections (80) have a connecting portion (146) which connects together the lower drop sections (80).

5. A handlebar as claimed in claim 4 characterised in that at least the connecting portion (146) is a part of an adapter piece which is removably added to the handlebars and which reduces flex in the handlebars when attached.

6. A handlebar as claimed in any one of the preceding claims characterised in that there is provided a pair of flexible struts (120) connectable between the pair of lower drop sections (80) and a front wheel fork (46) for reducing upward handlebar flex while permitting downward handlebar flex.

7. A handlebar as claimed in claim 6 characterised in that each of said flexible struts (120) comprise a flexible cable connectable in tension with the front wheel fork (46) and the lower drop sections (80).

8. A handlebar as claimed in any one of the preceding claims characterised in that at least one handbrake (58) is mounted to the intermediate drop portions (78).

9. A handlebar as claimed in any one of the preceding claims characterised in that the pair of lower drop sections (80) are inside of the pair of intermediated drop portions (78) and extend forwardly and downwardly from the pair of sideways portions (76) to thereby define multiple lower drop hand gripping positions for the rider.

## Patentansprüche

1. Fahrradlenker (56), der mit einem Lenkervorbau (44) verbindbar ist, welcher vor einem Fahrradsattel (40) angeordnet ist, mit einem querverlaufenden Bereich (72), welcher einen zentralen Abschnitt aufweist, der mit dem Lenkervorbau (44) verbindbar ist, und mit einem Paar seitlicher Bereiche (76), welche sich seitlich des Lenkervorbaus (44) erstrecken, mit einem Paar dazwischen angeordneter abfallender Bereiche (78), die sich, von den seitlichen Bereichen (76) aus gesehen, nach vorne und nach unten in einen Abschnitt hinein erstrecken, welcher im wesentlichen unterhalb des querlaufenden Bereiches (72) angeordnet ist, und mit einem Paar unterer Endbereiche (80), die sich von dem entsprechenden abfallenden Bereich des Paares abfallender Bereiche (78) aus zu einer der gegenüberliegenden Seiten des Lenkervorbaus (44) und im wesentlichen unterhalb des Lenkervorbaus (44) erstrecken, um hierdurch ein Paar Handgriffe zu bilden, welche im wesentlichen unterhalb des Lenkervorbaus (44) vorgesehen sind, um es dem Fahrer zu ermöglichen, eine möglichst schmale frontale Luftwiderstandsfläche zu erzielen,
**dadurch gekennzeichnet,** daß
der Fahrradlenker (56) aus einem einteiligen Rohr mit konstantem Durchmesser gefertigt ist.

2. Fahrradlenker nach Anspruch 1,
**dadurch gekennzeichnet,** daß
das Paar unterer Endbereiche (80) mit Enden derart versehen ist, daß zwischen den unteren Endbereichen (80) eine Lücke gebildet ist, wobei die Lücke unterhalb des Lenkervorbaus (44) vorgesehen ist.

3. Fahrradlenker nach Anspruch 1 oder 2,
**dadurch gekennzeichnet,** daß
sich das Paar dazwischen angeordneter abfallender Bereiche (78) in einem Winkel von ungefähr 90 Grad nach vorne erstreckt und sich anschließend nach vorne, nach hinten und nach unten in einem Winkel von ungefähr 160 Grad erstreckt, und daß das Paar unterer Endbereiche (80) sich von den dazwischen angeordneten abfallenden Bereichen (78) aus gesehen nach innen in einem Winkel von ungefähr 90 Grad erstreckt, um koaxial aufeinander zuzulaufen.

4. Fahrradlenker nach einem der vorhergehenden Ansprüche,
**dadurch gekennzeichnet,** daß
das Paar unterer Endbereiche (80) einen Verbindungsbereich (146) aufweist, welcher die unteren Endbereiche (80) miteinander verbindet.

5. Fahrradlenker nach Anspruch 4,
**dadurch gekennzeichnet,** daß
wenigstens der Verbindungsbereich (146) Teil eines Adaptergliedes ist, welches abnehmbar an dem Fahrradlenker angebracht ist und welches, wenn es angebracht ist, die Nachgiebigkeit des Fahrradlenkers verringert.

6. Fahrradlenker nach einem der vorhergehenden Ansprüche,
**dadurch gekennzeichnet,** daß
ein Paar dehnbarer Streben (120) vorgesehen ist, welche zwischen dem Paar unterer Endbereiche (80) und der Vorderradgabel (46) angebracht sind, um die Nachgiebigkeit des Fahrradlenkers nach oben zu reduzieren, während gleichzeitig eine Nachgiebigkeit des Fahrradlenkers nach unten möglich ist.

7. Fahrradlenker nach Anspruch 6,
**dadurch gekennzeichnet,** daß
jede einzelne der dehnbaren Streben (120) ein dehnbares Seil aufweist, welches vorgespannt mit der Vorderradgabel (46) und den unteren Endbereichen (80) verbindbar ist.

8. Fahrradlenker nach einem der vorhergehenden Ansprüche,
**dadurch gekennzeichnet,** daß
wenigstens ein Bremshebel (58) an den dazwischen angeordneten abfallenden Bereichen (78) angebracht ist.

9. Fahrradlenker nach einem der vorhergehenden Ansprüche,
**dadurch gekennzeichnet,** daß
das Paar unterer Endbereiche (80) innerhalb des Paares der dazwischen angeordneten abfallenden Bereiche (78) angeordnet ist und sich von dem Paar seitlicher Bereiche (76) aus gesehen nach vorne und nach unten erstreckt, wodurch eine Vielzahl unterer Griffpositionen für den Fahrer gebildet werden.

## Revendications

1. Guidon de bicyclette (56) à fixer à une potence de direction (44) située en avant d'un siège (40) de bicyclette, comportant une traverse (72) se composant d'un tronçon central à fixer à la potence de direction (44) et d'une paire de parties latérales (76) s'étendant latéralement à partir de ce tronçon, une paire de parties surbaissées intermédiaires (78) s'étendant vers l'avant et vers le bas à partir des deux parties latérales (76) vers une zone située généralement au-dessous de la traverse (72), et une paire de tronçons surbaissés inférieurs (80) s'étendant chacun à partir d'une des deux parties surbaissées (78) vers des côtés opposés de la potence de direction (44) et généralement au-dessous de cette potence (44) pour déterminer une paire de positions de prise manuelle situées généralement au-dessous de cette potence (44) et permettant au cycliste de présenter un profil frontal étroit, caractérisé en ce que le guidon (56) est formé d'une seule pièce de tube de diamètre uniforme.

2. Guidon selon la revendication 1, caractérisé en ce que les deux tronçons surbaissés inférieurs (80) se terminent par des extrémités laissant entre elles un vide situé au-dessous de la potence de direction (44).

3. Guidon selon la revendication 1 ou 2, caractérisé en ce que les deux parties surbaissées intermédiaires (78) s'étendent vers l'avant approximativement à 90 degrés, puis s'étendent vers l'avant, l'arrière et le bas approximativement à 160 degrés, et en ce que les deux tronçons surbaissés inférieurs (80) s'étendent à partir des parties surbaissées intermédiaires (78) vers l'intérieur approximativement à 90 degrés pour converger coaxialement l'un vers l'autre.

4. Guidon selon l'une des revendications précédentes caractérisé en ce que les deux tronçons surbaissés inférieurs (80) ont une partie de raccordement (146) qui raccorde ces deux tronçons (80) l'un à l'autre.

5. Guidon selon la revendication 4, caractérisé en ce qu'au moins la partie de raccordement (146) fait partie d'une pièce de raccord qui est ajoutée au guidon de manière amovible et qui réduit la flexion dans le guidon quand elle lui est fixée.

6. Guidon selon l'une des revendications précédentes caractérisé en ce qu'il est prévu une paire d'étais flexibles (120) à connecter entre la paire de tronçons surbaissés inférieurs (80) et une fourche (46) de roue avant pour réduire une flexion du guidon vers la haut tout en permettant une flexion du guidon vers le bas.

7. Guidon selon la revendication 6, caractérisé en ce que chacun desdits étais flexibles (120) comporte un câble flexible susceptible d'être connecté sous tension à la fourche de roue avant (46) et aux tronçons surbaissés inférieurs (80).

8. Guidon selon l'une des revendications précédentes caractérisé en ce qu'au moins un frein à main (58) est monté sur les parties surbaissées intermédiaires (78).

9. Guidon selon l'une des revendications précédentes, caractérisé en ce que les deux tronçons surbaissés inférieurs (80) se trouvent en dedans par rapport aux deux parties surbaissées intermédiaires (78) et s'étendent vers l'avant et le bas à partir des deux parties latérales (76) pour définir ainsi des positions surbaissées multiples de prise manuelle par le cycliste.
